# EUROPÄISCHE PATENTANMELDUNG

(11) **EP 4 287 342 A1**
(43) Veröffentlichungstag der Anmeldung: **06.12.2023**
(21) Anmeldenummer: 23159113.2
(22) Anmeldetag: 28.02.2023
(51) Int. Cl.: H01M 10/058, H01M 10/0562, H01M 50/434, H01M 10/052, H01M 4/04, H01M 10/44

(54) **VERFAHREN ZUR HERSTELLUNG EINES FESTSTOFFELEKTROLYTS FÜR EINE FESTSTOFFBATTERIE**

(30) Priorität: 31.05.2022 DE 102022205467
(71) Anmelder: VOLKSWAGEN AG, 38440 Wolfsburg (DE)
(72) Erfinder: Kunze, Miriam, 30926 Seelze (DE); Koch, Stephan Leonhard, 38154 Königslutter (DE); Jansen, Tobias, 38106 Braunschweig (DE)

(57) **Zusammenfassung**

Die Erfindung betrifft ein Verfahren zur Herstellung eines Feststoffelektrolyts zur Verwendung in einer Feststoffbatterie, wobei das Verfahren folgende Schritte umfasst:
- Herstellen eines keramischen Feststoffelektrolyten mit dem für die Keramik spezifischen stöchiometrischen Verhältnis,
- Über-Lithiieren des keramischen Feststoffelektrolyts, wobei eine Lithium-Konzentration in dem keramischen Feststoffelektrolyt über die stöchiometrische Lithium-Konzentration der Keramik hinaus gesteigert wird.

Die Erfindung betrifft ferner einen Feststoffelektrolyt, welcher mit solch einem Verfahren überlithiiert ist.

## Beschreibung

Die Erfindung betrifft ein Verfahren zur Herstellung eines Feststoffelektrolyts für eine Feststoffbatterie sowie eine Batteriezelle mit einem solchen Feststoffelektrolyt.

Wiederaufladbare elektrochemische Speichersysteme werden für viele Bereiche des täglichen Lebens immer wichtiger. Energiespeichervorrichtungen mit hoher Kapazität, wie beispielsweise Lithium-lonen(Li-lonen)-Batterien und Kondensatoren, werden in einer steigenden Anzahl von Anwendungen eingesetzt, einschließlich tragbarer Elektronik, Medizin, Transport, netzgekoppelter großer Energiespeicher, der Speicherung erneuerbarer Energien und einer unterbrechungsfreie Stromversorgung (USV). Bei jeder dieser Anwendungen stellen die Lade- /Entladezeit und die Kapazität von Energiespeichervorrichtungen die entscheidenden Parameter dar. Darüber hinaus sind auch Größe, Gewicht und/oder Kosten solcher Energiespeichervorrichtungen wichtige Parameter. Außerdem ist ein niedriger Innenwiderstand für eine hohe Leistung erforderlich. Je geringer der Widerstand ist, desto geringer sind die Einschränkungen, denen die Energiespeichervorrichtung bei der Abgabe elektrischer Energie ausgesetzt ist. Beispielsweise wirkt sich der Innenwiderstand im Fall eines Akkus auf die Leistung aus, indem er die Gesamtmenge der Nutzenergie, die vom Akku gespeichert wird, sowie die Fähigkeit des Akkus, hohen Strom zu liefern, reduziert. Ferner sollen Li-lonen-Akkus die angestrebte Kapazität und die gewünschte Zyklisierung am besten erreichen. Allerdings fehlen den Li-lonen-Akkus in ihrer jetzigen Form oft die Energiekapazität und die Anzahl der Lade-/Entladezyklen für diese wachsenden Anwendungen.

Wie oben bereits beschrieben sind Lithium-Ionen-Batterien heutzutage weit verbreitet. In der Unterhaltungselektronik werden sie beispielsweise in tragbaren Geräten wie Mobiltelefonen und Smartphones, Laptops und Tablets usw. verwendet. Darüber hinaus sind Lithium-Ionen-Batterien ein wichtiger Bestandteil von Elektrofahrzeugen, da elektrische Batterien in Elektroautos und Hybridfahrzeugen verwendet werden und damit Bestandteil der Massenproduktion geworden sind. Rund um die Welt arbeiten Forschende daran, die nächste Akkugeneration für die Elektromobilität zu entwickeln. Am vielversprechendsten sind hier Feststoffbatterien, die bereits kurz vor der Serienreife stehen und viele Vorteile für den Einsatz in Elektroautos bieten. Feststoffbatterien bieten gegenüber bekannten Lithium-Ionen-Batterien eine höhere Energiedichte, die Akkus können somit kleiner oder bei gleicher Größe Leistungsstärker ausgeführt werden, bieten noch mehr Sicherheit und können schneller geladen werden.

Feststoffbatterien benötigen idealerweise keinen Kühlkreislauf, wie er bei Lithium-Ionen-Batterien mit flüssigem Elektrolyt notwendig ist. Das spart Platz und Gewicht. Sie können deutlich mehr Ladezyklen erreichen, sich nicht selbst zersetzen oder überhitzen und bieten eine homogenere Stromverteilung. Außerdem können sie mit sehr dünnen Elektrolytschichten gebaut werden, die auch noch flexibel sind.

Prinzipiell ist es bekannt, bei Lithium-Ionen-Batterien eine Anode oder eine Kathode zu prelithiieren, um die Leistungsdichte der Batteriezelle zu erhöhen und irreversible Verluste beim Zyklisieren der Batteriezelle zu verringern.

Aus der WO 2022/008 506 A1 ist eine Lithium-basierte Feststoffzelle bekannt, welche einen Zellstapel aus einem Kupfersubstrat, eine Graphitschicht, einen Feststoffelektrolyt und eine Nickel-Mangan-Kobaltoxidschicht aufweist. Der Feststoffelektrolyt ist dabei in Kontakt mit der Graphitschicht und mit der Nickel-Mangan-Kobaltoxidschicht. Das Kupfersubstrat formt dabei eine Anode des Zellstapels und die Nickel-Mangan-Kobaltoxidschicht eine Kathode des Zellstapels aus. Dabei ist vorgesehen, dass der Feststoffelektrolyt ein Lithium-basierter Elektrolyt ist. Die Graphitschicht weist eine erste SEI (solid electrolyte interface) und eine zweite Elektrolyt-Grenzfläche auf, die während einer Vorlithiierung mit einem flüssigen Elektrolyten auf Lithiumbasis erreicht wird, und eine zweite SEI, die während einer Vorlithiierung mit dem polymeren Elektrolyten auf Lithiumbasis erreicht wird.

Aus der CN 113 571 672 A ist ein Verfahren zur Herstellung einer Trockenelektrode für eine Feststoffbatterie bekannt, bei dem ein Elektrodenmaterial, das eine aktive Substanz, ein leitfähiges Material, ein erstes festes Elektrolytmaterial und ein erstes Bindemittel umfasst, durch eine Trockenfilmherstellung zu einem Elektrodenfilm verarbeitet wird.

Die US 2019/0 372 127 A1 beschreibt eine Zelle, welche ein Hybrid aus einer Batteriezelle und einem Kondensator ist. Die Zelle umfasst eine poröse Anode und eine poröse Kathode, welche aus einer Lithium-Verbindung hergestellt ist. Die Kathode ist elektrisch mit dem Kondensator verbunden. Dabei wird wie bei einer Lithium-Ionen-Batterie ein flüssiger Elektrolyt verwendet, um einen Elektronentransport von der Anode zur Kathode zu ermöglichen.

Der Erfindung liegt nun die Aufgabe zugrunde, die Energiedichte und die Lebensdauer einer Feststoffbatterie weiter zu erhöhen.

Die Aufgabe wird durch ein Verfahren zur Herstellung eines Feststoffelektrolyts zur Verwendung in einer Feststoffbatterie gelöst, umfassend folgende Schritte:
- Herstellen eines keramischen Feststoffelektrolyts mit dem für die Keramik spezifischen stöchiometrischen Verhältnis,
- Über-Lithiieren des keramischen Feststoffelektrolyts, wobei eine Lithium-Konzentration in dem keramischen Feststoffelektrolyt über die stöchiometrische Lithium-Konzentration der Keramik hinaus gesteigert wird.

Unter einem über-lithiierten Feststoffelektrolyt ist ein Feststoffelektrolyt zu verstehen, der mehr als Lithium als in dem stöchiometrischen Verhältnis des Feststoffelektrolyt vorgesehen aufweist. Insbesondere ist unter einem über-lithiierten Feststoffelektrolyt ein Feststoffelektrolyt zu verstehen, dem mindestens 1 mol % mehr Lithium, bevorzugt mindestens 3 mol %, besonders bevorzugt mindestens 5 mol % mehr Lithium als ein stöchiometrischer Feststoffelektrolyt aufweist.

Das Verfahren ermöglicht es, bei einer Feststoffbatterie, bei welcher eine Anode *in situ* im ersten Ladezyklus gebildet wird, eine höhere Menge an Lithium abzuscheiden und somit die Kapazität der Feststoffbatterie zu erhöhen. Ferner kann die Kathode kleiner dimensioniert werden, um ausreichend Lithium zur Abscheidung einer in situ gebildeten Anode zur Verfügung zu stellen, da durch den über-lithiierten Feststoffelektrolyt zusätzliches Lithium zur Verfügung gestellt wird. Dadurch kann das Gewicht der Feststoffbatterie reduziert werden. Ebenfalls können durch die kleinere Dimensionierung der Kathode Rohstoffe und damit verbundene Kosten eingespart werden. Darüber hinaus wird die Gefahr einer Lithium-Verarmung an der Kathode reduziert, wodurch die Lebensdauer der Batteriezelle der Feststoffbatterie erhöht werden kann. Ferner können Lithium-Verluste an der *in situ* gebildeten Anode durch Nebenreaktionen stattfinden. Diese Verluste können durch die Über-Lithiierung des Feststoffelektrolyts ausgeglichen werden. Insbesondere reagiert das "Reserve-Lithium" aus der Über-Lithiierung anstelle des aktiven Lithiums der Anode.

Im Rahmen der vorliegenden Erfindung wird unter dem Begriff "für die Keramik spezifisches stöchiometrisches Verhältnis" die durch die Valenzen und Oxidationsstufen der beteiligten Elemente vorbestimmten molaren Anteile der beteiligten Elemente für eine in der Summe ungeladene Keramik-Zusammensetzung verstanden.

Durch die in den abhängigen Ansprüchen aufgeführten zusätzlichen Merkmale sind vorteilhafte Ausgestaltungen sowie weitere Verbesserungen des Verfahrens zur Herstellung eines Feststoffelektrolyts möglich.

In bevorzugter Ausgestaltung der Erfindung ist vorgesehen, dass der keramische Feststoffelektrolyt zur Über-Lithiierung, insbesondere eine keramische Membran, in schmelzflüssiges Lithium getaucht wird. Bevorzugt wird der keramische Feststoffelektrolyt, insbesondere die keramische Membran, nach einem Sinterprozess in schmelzflüssiges Lithium getaucht.

Durch ein Eintauchen des keramischen Feststoffelektrolyts in schmelzflüssiges Lithium kann auf einfache Art und Weise eine Über-Lithiierung des Feststoffelektrolyts erreicht werden. Ferner kann die Abkühlzeit des keramischen Feststoffelektrolyts nach dem Sintern durch das Eintauchen in schmelzflüssiges Lithium verkürzt werden, wodurch der Herstellprozess des Feststoffelektrolyts verkürzt werden kann. Um den Prozess zu vereinfachen und zu verkürzen kann auch nur eine Seite des Feststoffelektrolyts in schmelzflüssiges Lithium getaucht werden. Dadurch wird der Prozess verkürzt, gleichzeitig ist jedoch auch das Potential zur Über-Lithiierung beschränkt. Für viele Anwendungsfälle kann aber auch ein nur einseitiges Eintauchen des Feststoffelektrolyts eine hinreichend starke Über-Lithiierung ausbilden, um die elektrische Leistungsfähigkeit der Batteriezelle zu steigern.

Alternativ kann ein Festelektrolytpulver zur Herstellung des Feststoffelektrolyts mit Lithium-Pulver mit vermischt und dann das Gemisch auf eine Temperatur von 180°C - 300°C erhitzt werden, wobei das Lithium-Pulver schmilzt. In diesem Fall würde eine keramische Membran aus dem Feststoffelektrolyt erst nach der Beladung mit dem zusätzlichen Lithium aus dem geschmolzenen Lithium-Pulver hergestellt werden. Alternativ können das Festelektrolytpulver als Ausgangsmaterial für die Herstellung eines Feststoffelektrolyts und das Pulver auch gemeinsam vermahlen werden, um einen Ausgangsstoff zu schaffen, welcher zur Herstellung eines über-lithiierten Feststoffelektrolyts geeignet ist.

Eine weitere bevorzugte Möglichkeit zur Über-Lithiierung des Feststoffelektrolyts bestaht darin, eine Lithium-Schicht auf den keramischen Feststoffelektrolyten aufzudampfen oder zu sputtern und dann den Feststoffelektrolyt mit der aufgedampften oder gesputterten Lithium-Schicht zu erwärmen, sodass das freie Lithium aus der aufgebrachten Schicht in dem Feststoffelektrolyt aufgenommen wird.

Besonders bevorzugt ist dabei, wenn die Über-Lithiierung bei einer Temperatur von 180°C bis 300°C erfolgt. In diesem Temperaturbereich liegt elementares Lithium in einem flüssigen Aggregatszustand vor, während die Temperatur niedrig genug ist, um eine Zersetzung oder eine sonstige Schädigung des keramischen Feststoffelektrolyts zu vermeiden. Dadurch kann auf besonders einfache und energiesparende Art und Weise eine Über-Lithiierung des Feststoffelektrolyts erreicht werden.

In weiterer bevorzugter Ausgestaltung der Erfindung ist vorgesehen, dass die Lithium-Konzentration der Keramik durch einen elektrochemischen Prozess gesteigert wird. Dabei wird der Feststoffelektrolyt mit Lithium belegt und ein Flüssigelektrolyt appliziert. Anschließend wird ein elektrisches Potential angelegt und das Lithium geht in den Feststoffelektrolyt. Alternativ kann der Vorgang auch ohne das Anlegen eines zusätzlichen elektrischen Potentials durchgeführt werden, wobei das Lithium in diesem Fall durch das sich selbst entsprechend der elektrochemischen Spannungsreihe ausbildende Potential in den Feststoffelektrolyten übergeht.

In einer bevorzugten Ausgestaltung des Verfahrens ist vorgesehen, dass der Feststoffelektrolyt eine NASICON-Struktur aufweist, wobei das zusätzliche Lithium auf Zwischengitterplätzen der Kristallstruktur des Feststoffelektrolyts eingebaut wird. Geeignete Lithium-analoge Strukturen von NASICON umfassen insbesondere Lithiumphosphate der Formel LiM₂(PO₄)₃, wobei M für ein Basiselement ausgewählt aus der Gruppe Ti, Ge, Zr, Hf oder Sn steht. Zur Steigerung der lonenleitfähigkeit können die Lithiumphosphate dotiert werden, wobei als Dotand vorzugsweise Al, Cr, Ga, Fe, Sc, In, Lu, Y und La dienen. Besonders bevorzugt sind LiZr₂(PO₄)₃ (LZP) dotiert mit La, Ti oder Al; LiTi₂(PO₄)₃ (LTP); Li₁₊ₓAlₓTi₂₋ₓ(PO₄)₃ mit x = 0,3 - 0,5 (LATP) Li₁₊ₓAlₓGe₂₋ₓ(PO₄)₃ mit x = 0,4 - 0,5 (LAGP) und Li_{1.4}Al_{0.4}Ge_{0.2}Ti_{1.6}(PO₄)₃ LAGTP. Durch die Über-Lithiierung kann zusätzliches, freies Lithium in die Gitterstruktur des Feststoffelektrolyts eingebracht werden, wodurch die Leistungsfähigkeit der Batteriezelle der Feststoffbatterie erhöht werden kann.

In der Batteriezelle wird das überschüssige Lithium beim ersten Ladevorgang der Zelle in situ abgeschieden, um eine Anode auszubilden. Um eine hinreichend große Anode ausbilden zu können, ist eine entsprechend starke Über-Lithiierung des Feststoffelektrolyts notwendig. Eine Teilmenge des Lithiums kann durch eine entsprechend große Dimensionierung der Kathode in die Batteriezelle eingebracht werden. Durch eine Über-Lithiierung des Feststoffelektrolyts kann deutlich mehr Lithium in die Batteriezelle eingebracht werden, sodass die Kathode kleiner dimensionert werden kann. Dadurch wird insgesamt weniger Material benötigt, sodass die gravimetrische und volumenspezifische Energiedichte der Batteriezelle erhöht werden kann. Das zusätzliche Lithium setzt sich an defekte Stellen in der Kristallstruktur sowie auf Zwischengitterplätze. Diese sind u.a. auch die Pfade, welche ein Lithium-Ion nutzt, um sich im Kristall durch den Feststoffelektrolyt zu bewegen. Durch die Über-Lithiierung und das zusätzliche Lithium wird zum einen die Leitfähigkeit für Lithium-Ionen erhöht und zum anderen freies Lithium zur Verfügung gestellt, welches sich beim ersten Ladevorgang der Batteriezelle als Anodenmaterial in Situ abscheidet und somit die Anode der Batteriezelle ausbildet.

In einer weiteren bevorzugten Ausgestaltung des Verfahrens ist vorgesehen, dass der Feststoffelektrolyt eine LISICON-Struktur aufweist, wobei das zusätzliche Lithium auf Zwischengitterplätzen der Kristallstruktur des Feststoffelektrolyts eingebaut wird. LISICON ist ein Akronym für Lithium Super lonic Conductor und bezog sich ursprünglich auf eine Familie von Mineralien mit der chemischen Formel Li₂₊₂ₓZn₁₋ₓGeO₄. Auch Feststoffelektrolyte mit einer LISICON-Struktur ermöglichen eine zusätzliche Aufnahme von Lithium, sodass auch diese Feststoffelektrolyte über-lithiiert werden können und somit zusätzliches Lithium für die Funktion in der Batteriezelle einer Feststoffbatterie zur Verfügung stellen können.

In einer weiteren bevorzugten Ausgestaltung des Verfahrens ist vorgesehen, dass der Feststoffelektrolyt eine Granat-Struktur aufweist, wobei das zusätzliche Lithium auf Zwischengitterplätzen der Kristallstruktur des Feststoffelektrolyts eingebaut wird. Granate sind strukturell betrachtet Orthosilikate der allgemeinen Zusammensetzung X₃Y₂(SiO₄)₃, die im kubischen Kristallsystem kristallisieren, wobei X und Y achtfach bzw. sechsfach koordinierte Kationenstellen darstellen. Die einzelnen SiO₄-Tetraeder sind miteinander durch ionische Bindungen über die interstitiellen B-Kationen verbunden. Granatartige Verbindungen mit einem Lithiumüberschuss sind gute Lithiumionenleiter. Besonders geeignete Beispiele für lonenleiter mit granatartiger Struktur ist Lithium-Lanthan-Zirkoniumoxid Li₇La₃Zr₂O₁₂ (LLZO), Li_{6.25}La₃Zr2AL_{0.25}O₁₂ Lithium-Lanthan-Zirkoniumaluminat und Lithium-Lanthan-Zirkoniumtantalat Li_{6.6}La₃Zr_{1.6}Ta_{0.4}O₁₂. Durch eine Über-Lithiierung kann hier weiteres Lithium in die Gitterstruktur des Festkörperelektrolyts eingebaut werden, wodurch die Abscheidung von Lithium an der in situ gebildeten Anode begünstigt wird. Eine Über-Lithiierung führt am Beispiel von Lithium-Lanthan-Zirkoniumoxid (LLZO) zu einem Verhältnis von Li_{7,5}La₃Zr₂O₁₂ bei einer 1mol %igen Über-Lithiierung, zu einem Verhältnis von Li₈La₃Zr₂O₁₂ bei einer 3mol %igen Über-Lithiierung und von Li₉La₃Zr₂O₁₂ bei einer 5mol %igen Über-Lithiierung.

In einer weiteren bevorzugten Ausgestaltung des Verfahrens ist vorgesehen, dass der Feststoffelektrolyt eine Perowskit-Struktur oder Anti-Perowskit-Struktur aufweist, wobei das zusätzliche Lithium auf Zwischengitterplätzen der Kristallstruktur des Feststoffelektrolyts eingebaut wird. Ein besonders geeigneter Vertreter der Perowskite ist Lithiumlanthantitanat (LLTO), wobei Leerstellen in der Perowskit-Struktur die hohe Leitfähigkeit ermöglichen. Auch Feststoffelektrolyte mit einer Perowskit-Struktur ermöglichen eine zusätzliche Aufnahme von Lithium, sodass auch diese Feststoffelektrolyte über-lithiiert werden können und somit zusätzliches Lithium für die Funktion in der Batteriezelle einer Feststoffbatterie zur Verfügung stellen können.

Ein weiterer Aspekt der Erfindung betrifft einen Feststoffelektrolyt zur Verwendung in einer Feststoffbatterie, wobei der Feststoffelektrolyt mit einem der in den vorhergehenden Abschnitten beschriebenen Verfahren über-lithiiert ist. Eine Batteriezelle mit einem solchen Feststoffelektrolyt ermöglicht bei gleicher Größe im Vergleich zu den aus dem Stand der Technik bekannten Batteriezellen eine höhere Energiedichte oder bei gleicher Energiedichte eine geringere Baugröße. Insbesondere kann die Kathode kleiner dimensioniert werden, um ausreichend Lithium zur Abscheidung einer in situ gebildeten Anode zur Verfügung zu stellen, da durch den über-lithiierten Feststoffelektrolyt zusätzliches Lithium zur Verfügung gestellt wird. Dadurch kann das Gewicht der Feststoffbatterie reduziert werden. Ebenfalls können durch die kleinere Dimensionierung der Kathode Rohstoffe und damit verbundene Kosten eingespart werden. Darüber hinaus wird die Gefahr einer Lithium-Verarmung an der Kathode reduziert, wodurch die Lebensdauer der Batteriezelle der Feststoffbatterie erhöht werden kann. Ferner können Lithium-Verluste an der in situ gebildeten Anode durch Nebenreaktionen stattfinden. Diese Verluste können durch die Über-Lithiierung des Feststoffelektrolyts ausgeglichen werden. Insbesondere reagiert das "Reserve-Lithium" aus der Über-Lithiierung anstelle des aktiven Lithiumoxids der Anode.

Die verschiedenen, in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein schematische Darstellung zur Über-Lithiierung eines Feststoffelektrolyts zur Herstellung einer Batteriezelle für eine Feststoffbatterie und
- Figur 2: ein Ablaufdiagramm zur Durchführung eines erfindungsgemäßen Verfahrens zur Über-Lithiierung eines Feststoffelektrolyts.

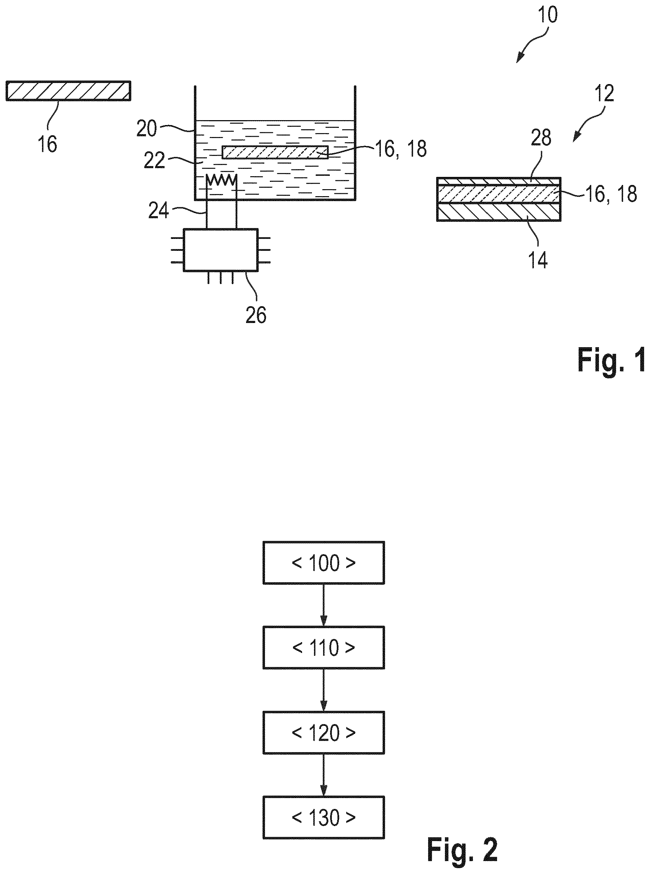

Figur 1 zeigt eine schematische Darstellung zur Herstellung einer Batteriezelle 12 für eine Feststoffbatterie 10. Die Batteriezelle 12 umfasst eine Kathode 14 und einen keramischen Feststoffelektrolyt 16, 18, welcher durch einen Prozess zur Über-Lithiierung gegenüber dem stöchiometrischen Verhältnis der Keramik 18 mit Lithium 22 überladen ist. Die Batteriezelle 12 ist dazu eingerichtet, in situ an einer der Kathode 14 abgewandten Seite des Feststoffelektrolyts 16 eine Anode 28 auszubilden.

Zur Herstellung des über-lithiierten Feststoffelektrolyts 16 wird die Keramik 18 in ein Tauchbad 20 mit schmelzflüssigem Lithium 22 getaucht. Das Tauchbad 20 weist ein Heizelement 24 und eine Steuerungseinheit 26 auf, mit welcher insbesondere die Temperatur des schmelzflüssigen Lithiums 22 in dem Tauchbad 20 gesteuert werden kann. Durch das Eintauchen des Feststoffelektrolyts16 in das schmelzflüssige Lithium 22 kann der Feststoffelektrolyt 16 mit Lithium 22 überladen werden, sodass mehr Lithium 22 in dem Feststoffelektrolyt 16 vorhanden ist, als es die stöchiometrische Zusammensetzung der Keramik 18 vorsieht. Dadurch ist es möglich, einen gleichsam mechanisch stabilen Feststoffelektrolyt 16 herzustellen, welcher zusätzliches freies Lithium 22 für die Ausbildung einer Anode liefern kann. Das schmelzflüssige Lithium 22 in dem Tauchbad 20 weist dabei vorzugsweise eine Temperatur auf, welche oberhalb des Schmelzpunktes von Lithium 22 bei 180°C und unterhalb von 300°C liegt, um eine Zersetzung oder sonstige thermische oder chemische Schädigung der Keramik 18 des Feststoffelektrolyts16 zu vermeiden.

In Figur 2 ist ein Ablaufdiagramm zur Herstellung eines erfindungsgemäßen Feststoffelektrolyts 16 dargestellt. In einem ersten Verfahrensschritt <100> wird der keramische Feststoffelektrolyt 16 geformt, was insbesondere durch einen Sinterprozess erfolgen kann, wobei die Keramik 18 des Feststoffelektrolyts 16 mit einem gewünschten stöchiometrischen Verhältnis der eingesetzten Elemente hergestellt wird. In einem darauffolgenden Verfahrensschritt <110> wird die Keramik 18 abgekühlt, bis der Feststoffelektrolyt 16 seine gewünschte mechanische Festigkeit erreicht hat. In einem darauffolgenden Verfahrensschritt <120> wird der Feststoffelektrolyt 16 über-lithiiert, indem zusätzliches Lithium in die Gitterstruktur des keramischen Feststoffelektrolyts 16 eingebracht wird. Dies kann durch ein Eintauchen des Feststoffelektrolyts 16 in schmelzflüssiges Lithium 22 oder durch ein anderes geeignetes Verfahren erfolgen, bei welchem Lithium 22 in die Zwischengitterplätze der Keramik 18 eingebaut wird. Der über-lithiierte Feststoffelektrolyt 16 wird dann in einem Verfahrensschritt <130> aus dem Prozessumfeld zum Einbau von Lithium-Atomen in die Keramik 18 entfernt und einem Prozess zur Herstellung eines Zellstapels für die Batteriezelle 12 zugeführt.

### Bezugszeichenliste

- 10: Feststoffbatterie
- 12: Batteriezelle
- 14: Kathode
- 16: Feststoffelektrolyt
- 18: Keramik

- 20: Tauchbad
- 22: Lithium
- 24: Heizelement
- 26: Steuerungseinheit
- 28: in situ gebildete Anode

## Patentansprüche

1. Verfahren zur Herstellung eines Feststoffelektrolyts (16) zur Verwendung in einer Feststoffbatterie (10), umfassend folgende Schritte:
- Herstellen eines keramischen Feststoffelektrolyts (16) mit dem für die Keramik (18) spezifischen stöchiometrischen Verhältnis,
- Über-Lithiieren des keramischen Feststoffelektrolyts (16), wobei eine Lithium-Konzentration in dem keramischen Feststoffelektrolyt über die stöchiometrische Lithium-Konzentration der Keramik (16) hinaus gesteigert wird.

2. Verfahren nach Anspruch 1, **dadurch gekennzeichnet, dass** der keramische Feststoffelektrolyt (16) zur Über-Lithiierung in schmelzflüssiges Lithium (22) getaucht wird.

3. Verfahren nach Anspruch 2, **dadurch gekennzeichnet, dass** die Über-Lithiierung bei einer Temperatur von 180°C bis 300°C erfolgt.

4. Verfahren nach Anspruch 1, **dadurch gekennzeichnet, dass** die Lithium-Konzentration der Keramik (18) durch einen elektrochemischen Prozess gesteigert wird.

5. Verfahren nach einem der Ansprüche 1 bis 4, **dadurch gekennzeichnet, dass** der Feststoffelektrolyt (16) eine NASICON-Struktur aufweist, wobei das zusätzliche Lithium (22) auf Zwischengitterplätzen der Kristallstruktur des Feststoffelektrolyts (16) eingebaut wird.

6. Verfahren nach einem der Ansprüche 1 bis 4, **dadurch gekennzeichnet, dass** der Feststoffelektrolyt (16) eine LISICON-Struktur aufweist, wobei das zusätzliche Lithium (22) auf Zwischengitterplätzen der Kristallstruktur des Feststoffelektrolyts (16) eingebaut wird.

7. Verfahren nach einem der Ansprüche 1 bis 4, **dadurch gekennzeichnet, dass** der Feststoffelektrolyt (16) eine Granat-Struktur aufweist, wobei das zusätzliche Lithium (22) auf Zwischengitterplätzen der Kristallstruktur des Feststoffelektrolyts (16) eingebaut wird.

8. Verfahren nach Anspruch 7, wobei der Feststoffelektrolyt (16) mit der Granat-Struktur ein Lithium-Lanthan-Zirkoniumoxid (Li₇La₃Zr₂O₁₂) oder ein Aluminium, Niob oder Tantal dotiertes Lithium-Lanthan- Zirkoniumoxid ist.

9. Verfahren nach einem der Ansprüche 1 bis 4, **dadurch gekennzeichnet, dass** der Feststoffelektrolyt (16) eine Perowskit-Struktur oder Anti-Perowskit-Struktur aufweist, wobei das zusätzliche Lithium (22) auf Zwischengitterplätzen der Kristallstruktur des Feststoffelektrolyts (16) eingebaut wird.

10. Feststoffelektrolyt zur Verwendung in einer Feststoffbatterie (10), wobei der Feststoffelektrolyt (16) mittels eines Verfahrens nach einem der Ansprüche 1 bis 9 über-lithiiert ist.
